# EUROPÄISCHE PATENTANMELDUNG

(11) **EP 3 932 792 A1**
(43) Veröffentlichungstag der Anmeldung: **05.01.2022**
(21) Anmeldenummer: 21182051.9
(22) Anmeldetag: 28.06.2021
(51) Int. Cl.: B62J 45/41, B62J 45/422, B62K 21/12, B62J 27/00, B62J 50/22

(54) **MOTORRAD MIT LENKERPROTEKTOR**

(30) Priorität: 01.07.2020 AT 505552020
(71) Anmelder: KTM AG, 5230 Mattighofen (AT)
(72) Erfinder: PREIS, Maximilian, 85617 Assling (DE); OTT, Andreas, 83135 Schechen (DE)
(74) Vertreter: Torggler & Hofinger Patentanwälte

(57) **Zusammenfassung**

Fahrzeug, insbesondere Motorrad, aufweisend einen Rahmen, einen Lenker (2) mit zwei Lenkergriffen (3a, 3b) und einer Kommunikationseinheit (4) mit zumindest einem Sensor (15) zur Erfassung von Daten betreffend das Fahrzeug (1) und einer Schnittstelle (17) zum Übertragen der erfassten Daten, wobei ein Lenkerprotektor (5) vorgesehen ist, wobei der Lenkerprotektor (5), vorzugsweise zentral, zwischen den Lenkergriffen (3a, 3b) angeordnet ist und wobei die Kommunikationseinheit (4) unterhalb des Lenkerprotektors (5) oder zumindest teilweise, vorzugsweise zur Gänze, innerhalb des Lenkerprotektors (5) angeordnet ist.

## Beschreibung

Die Erfindung betrifft ein Fahrzeug, insbesondere ein Motorrad, aufweisend einen Rahmen, einen Lenker mit zwei Lenkergriffen und eine Kommunikationseinheit mit zumindest einem Sensor zur Erfassung von Daten betreffend das Fahrzeug und einer Schnittstelle zum Übertragen der erfassten Daten.

Bei Fahrzeugen ist es üblich geworden, bestimmte Daten, beispielsweise betreffend die Position und Geschwindigkeit des Fahrzeugs, die Beschleunigung, den Neigungswinkel, die Umgebungstemperatur und dergleichen mehr während der Fahrt zu erfassen, aufzuzeichnen und anschließend an einem Computer, einem Tablet oder einem Smartphone graphisch auszuwerten. Dies gilt insbesondere für Fahrzeuge, die zum Hobby betrieben werden, wie zum Beispiel Motorräder oder (Elektro-)Fahrräder.

Zu diesem Zweck ist eine Kommunikationseinheit vorgesehen, in der Sensoren zur Erfassung gewisser Daten betreffend das Fahrzeug angeordnet sind. Diese Daten werden gegebenenfalls nach einer Speicherung in der Kommunikationseinheit über eine Schnittstelle an jenes Gerät übertragen, an dem die graphische Auswertung der Daten erfolgt.

Insbesondere bei Fahrrädern ist eine solche Kommunikationseinheit häufig in einem Fahrradcomputer integriert, der am Lenkrad befestigt wird. Nachteilig ist hier, dass beispielsweise im Fall eines Sturzes, die Kommunikationseinheit ungeschützt und somit stark gefährdet ist, beschädigt zu werden.

Bei Motorrädern ist aus diesem Grund die Kommunikationseinheit häufig im Inneren des Motorrad angeordnet, wodurch ein guter Schutz gegen Beschädigung geboten wird. Dies gilt insbesondere dann, wenn seitliche Verkleidungsteile das Innenleben des Motorrads schützen. Nachteilig ist bei dieser Anordnung jedoch, dass die metallischen Bauteile, welche die Kommunikationseinheit bei einer im Inneren des Motorrads liegenden Anordnung umgeben, insbesondere den GPS-Empfang deutlich erschweren. Zudem können andere Daten, wie z. B. die Temperatur, aufgrund der Abwärme des naheliegenden Motors gar nicht erfasst werden. Schließlich ist die Kommunikationseinheit bei einer solchen Anordnung schwer zugänglich, sodass eine Reparatur oder ein Austausch nur mit erheblichem Aufwand möglich ist.

Die vorliegende Erfindung stellt sich die Aufgabe, die obigen Nachteile zu vermeiden und ein Fahrzeug mit einer Kommunikationseinheit auszustatten, die einerseits leicht zugänglich ist und andererseits gegen äußere Einflüsse geschützt ist und gleichzeitig günstige Bedingungen für die Erfassung verschiedenster Daten bietet.

Diese Aufgabe wird durch ein Fahrzeug mit den Merkmalen des Anspruchs 1 gelöst. Weitere vorteilhafte Ausführungen der Erfindung sind in den abhängigen Ansprüchen definiert.

Die Erfindung betrifft ein Fahrzeug, insbesondere ein Motorrad, mit einem Rahmen, einem Lenker mit zwei Lenkergriffen, wobei ein Lenkergriff auf der rechten Seite des Lenkers und ein Lenkergriff auf der linken Seite des Lenkers angeordnet ist, sowie eine Kommunikationseinheit. Die Kommunikationseinheit, die häufig auch als CCU (Connectivity Control Unit) bekannt ist, weist zumindest einen Sensor zur Erfassung von Daten betreffend das Fahrzeug sowie eine Schnittstelle zum Übertragen der erfassten Daten auf. Beim Sensor kann es sich beispielsweise um einen GPS-Sensor, einen Sensor zur Messung des Neigungswinkels, wobei anstelle des Neigungswinkels aus Drehraten gemessen werden können, einen Beschleunigungs- sensor, einen Temperatursensor, einen Magnetfeldsensor, Sensoren zum Messen von Luftdruck und Luftfeuchtigkeit und dergleichen mehr handeln. Dabei sind Sensoren, die mit der Kommunikationseinheit verbunden sind und vom Lenkerprotektor geschützt sind im Sinne der Erfindung als zur Kommunikationseinheit gehörend anzusehen. Es kann zudem aber auch vorgesehen sein, dass Daten von weiteren, an anderen Stellen am Fahrzeug angeordneten Sensoren, von der Kommunikationseinheit empfangen und verarbeitet werden können. Bevorzugt weist die Kommunikationseinheit mehrere Sensoren zur Erfassung von Daten betreffend das Fahrzeug auf.

Die Schnittstelle dient dann dazu, die erfassten Daten zu einer Vorrichtung zu übertragen, von der die Daten gespeichert und/oder - vorzugsweise graphisch - aufbereitet werden. Dabei kann die Übertragung der Daten drahtlos, etwa mittels Bluetooth^{®} oder W-Lan, oder kabelgebunden erfolgen. In diesem Fall weist die Schnittstelle einen geeigneten Anschluss, zum Beispiel einen USB, einen USB-C oder dergleichen mehr auf. Es ist auch denkbar, dass die Schnittstelle dazu ausgebildet ist, mit einer Datenleitung, beispielsweise in Form einer CAN-Busleitung verbunden zu werden, über welche Daten und/oder Steuerbefehle transferiert werden.

Bei einem erfindungsgemäßen Lenkerprotektor handelt es sich um eine Schutzvorrichtung für den Fahrer des Fahrzeugs. Im Falle eines Sturzes schützt ein solcher Lenkerprotektor insbesondere den Brustbereich des Fahrers vor einem Aufprall auf die harten, zumeist aus Metall bestehenden Lenkerteile. Besonders schwerwiegende Folgen hätte ein Aufprall auf die Lenkerklemmung. Aus diesem Grund ist der Lenkerprotektor häufig oberhalb der Lenkerklemmung angeordnet.

Zur besseren Schutzwirkung kann der Lenkerprotektor ein dämpfendes Material, insbesondere einen Schaumstoff, enthalten, von dem ein Aufprall besonders gut aufgefangen werden kann. Ein solcher Schaumstoff enthaltender Lenkerprotektor ist auch als Lenkerpolster bekannt. Beim Schaumstoff kann es sich beispielsweise um ein thermoplastisches Polyurethan oder ein thermoplastisches Elastomer, etwa ein thermoplastisches Copolyesterelastomer handeln.

Der Lenkerprotektor, insbesondere der Lenkerpolster, kann eine, vorzugsweise aus Hartplastik bestehende, Schale aufweisen, die um das dämpfende Material angeordnet ist. Beim Hartplastik kann es sich beispielsweise um ein thermoplastisches Elastomer, etwa ein thermoplastisches Copolyesterelastomer, mit einer Hartkomponente, beispielsweise einem Polyamid, etwa ein Polyamid der Type Akromid^{®}. Sowohl der zu verwendende Schaumstoff als dämpfendes Material als auch das zu verwendende Hartplastik sind an sich im Stand der Technik bekannt.

Es ist auch denkbar, dass der Lenkerprotektor einen aus einem dämpfenden Material, beispielsweise einem Schaumstoff, hergestellten Oberteil, welcher in montiertem Zustand dem Fahrer zugewandt ist.

Der Oberteil kann dabei mit einem härteren, beispielsweise wiederum aus Hartplastik hergestellten Unterteil, vorzugsweise lösbar oder öffenbar, verbindbar sein.

Der aus einem härteren Material hergestellte Unterteil kann dabei bevorzugt am Lenker befestigt sein. Das härtere Material des Unterteils hat den Vorteil einer stabileren Verbindung mit dem Lenker. Die Verbindung zwischen Oberteil und Unterteil des Lenkerprotektors kann beispielsweise in Form einer Rastverbindung realisiert sein, wobei der Oberteil zusätzlich oder alternativ Oschwenkbar am Unterteil gelagert sein kann.

Erfindungsgemäß ist vorgesehen, dass der Lenkerprotektor zwischen den Lenkergriffen und die Kommunikationseinheit unterhalb des Lenkerprotektors oder zumindest teilweise, vorzugsweise zur Gänze, innerhalb des Lenkerprotektors angeordnet ist. Die Anordnung unterhalb oder innerhalb des Lenkerprotektors bewirkt einerseits einen Schutz der Kommunikationseinheit bei Stürzen oder vor sonstigen äußeren Einflüssen. Da der Lenkerprotektor im Lenkerbereich angeordnet ist, ist die Kommunikationseinheit darüber hinaus an einem Ort platziert, der einem GPS-Sensor optimale Bedingungen für den Empfang des GPS-Signals bietet, eine bessere Erfassung des Neigungswinkels sowie eine Messung der Umgebungstemperatur möglich macht, da in diesem Bereich keine wärmeabgebenden Bauteile angeordnet sind. Insbesondere kann bei einer Anordnung im Lenkerbereich die Antenne des GPS-Sensors auch größer ausgeführt werden als bei einer Anordnung im Inneren des Motorrads.

Beim erfindungsgemäßen Fahrzeug kann es sich um ein Motorrad handeln, wobei insbesondere Enduro-Motorräder geeignet sind, da beim Enduro-Einsatz die Sturzgefahr besonders groß ist und daher die Anordnung eines Lenkerprotektors, insbesondere eines Lenkerpolsters, besonders sinnvoll ist. Die Erfindung kann aber auch bei Fahrrädern, insbesondere Elektrofahrrädern, oder auch bei vierrädrigen Fahrzeugen mit einem Lenker mit zwei Lenkergriffen, wie etwa bei Quads oder Skidoos, verwendet werden.

In einer bevorzugten Ausführungsform ist der Lenkerprotektor, vorzugsweise auch die Kommunikationseinheit, zentral zwischen den Lenkergriffen angeordnet. Dies gewährleistet eine ideale Anordnung, insbesondere um den Neigungswinkel zu messen. Dabei bedeutet zentral, dass der Lenkerprotektor mittig zwischen linkem und rechtem Lenkergriff, also symmetrisch am Lenker angeordnet ist. Zudem ist bei einer zentralen Anordnung des Lenkerprotektors zwischen den Lenkergriffen der eine Antenne aufweisende GPS-Sensor in der Kommunikationseinheit besonders günstig platziert, da die Antenne für einen optimalen Empfang möglichst horizontal angeordnet sein soll.

In einer bevorzugten Ausführungsform der Erfindung weist der Lenkerprotektor eine Ausnehmung auf, in der die Kommunikationseinheit anordenbar ist. Dabei kann der Lenkerprotektor die Kommunikationseinheit in angeordnetem Zustand zur Gänze oder zumindest teilweise umhüllen. Es kann eine Schutzklappe vorgesehen sein, über die die Ausnehmung zugänglich ist. Insbesondere bei einem Lenkerprotektor aus Schaumstoff oder einem mit einem Oberteil aus Schaumstoff kann die Ausnehmung innerhalb des Schaumstoffs angeordnet sein. Gegebenenfalls kann eine, vorzugsweise aus Hartplastik bestehende, Hülle oder ein aus einem solchen Material hergestellter Unterteil vorgesehen sein. Die Hülle ist einer Ausführungsform als Schutzklappe ausgebildet.

Besonders bei einspurigen Fahrzeugen, insbesondere bei Motorrädern, besteht wenig Platz für die Anordnung von Bauteilen. Indem eine Ausnehmung im Lenkerprotektor vorgesehen ist, wird der bestehende Platz äußerst gut ausgenützt und durch die Anordnung der Kommunikationseinheit wird kein Platz verwendet, der für andere Bauteile zur Verfügung stehen soll.

Ist die Kommunikationseinheit zumindest teilweise innerhalb eines Lenkerprotektors mit Schaumstoff angeordnet, ergibt sich ein weiterer Vorteil dadurch, dass der die Kommunikationseinheit zumindest teilweise, vorzugsweise zur Gänze, umgebende Schaumstoff die Kommunikationseinheit von Vibrationen entkoppelt. Dies hat sich als günstig für die Funktion des oder der Sensoren herausgestellt.

Die Kommunikationseinheit ist entweder direkt oder über eine Haltevorrichtung am Motorrad befestigt. Insbesondere bei einer Anordnung innerhalb des Lenkerprotektors kann auch der Lenkerprotektor oder Teil des Lenkerprotektors, als Haltevorrichtung für die Kommunikationseinheit angesehen werden.

In einer weiteren Ausführungsform der Erfindung ist eine Haltevorrichtung vorgesehen, von der die Kommunikationseinheit und/oder der Lenkerprotektor gehalten werden. Die Haltevorrichtung selbst wird am Lenker befestigt.

Vorzugsweise weist die Kommunikationseinheit einen Speicher auf, mit dem die vom Sensor erfassten Daten gespeichert werden können. Dabei handelt es sich um an sich im Stand der Technik bekannte Speicher, wie zum Beispiel SSD-Speicher. Denkbar ist es prinzipiell aber auch, dass die vom Sensor erfassten Daten über die Schnittstelle direkt und ohne Speicherung im Speicher übertragen werden.

In einer weiteren Ausführungsform der Erfindung weist die Kommunikationseinheit eine Empfangsvorrichtung zum Empfang von Daten betreffend den Fahrzeugzustand auf, die zum Beispiel von einer Steuereinheit des Fahrzeugs zur Verfügung gestellt werden, die mit einer entsprechenden Sendevorrichtung versehen ist. Dabei können diese Daten kabellos, etwa mittels Bluetooth^{®}, oder auch kabelgebunden an die Empfangsvorrichtung übermittelt werden. Die Empfangsvorrichtung kann in der Schnittstelle integriert oder mit der Schnittstelle verbindbar sein. Beispielsweise können die aktuelle Geschwindigkeit, der Reifendruck, der Tankfüllstand, Öl- oder Kühlwassertemperatur, der aktuell eingelegte Gang oder die aktuell geforderte Leistung, etwa durch Angabe der Öffnung im Vergaser, an die Empfangsvorrichtung übertragen werden. Diese Daten werden dann ebenfalls über die Schnittstelle, gegebenenfalls nach einer Speicherung im Speicher, übertragen und können graphisch ausgewertet werden.

In einer Ausführungsform weist die Kommunikationseinheit selbst eine Recheneinheit auf, insbesondere zum Erstellen von Statistiken aus den erfassten und/oder empfangenen Daten. Dies ist vor allem dann sinnvoll, wenn die Schnittstelle zur drahtlosen Übertragung von Daten, insbesondere mittels W-Lan und/oder Bluetooth^{®} ausgebildet ist. In diesem Fall können von der Recheneinheit bearbeitete Daten unmittelbar am Smartphone angezeigt werden. Möglich wäre auch die Anzeige direkt in der Display-Einheit des Fahrzeugs, sofern dieses mit einer entsprechenden Empfangseinheit zum Empfang der von der Schnittstelle übertragenen Daten versehen ist.

In einer weiteren Ausführungsform weist die Kommunikationseinheit eine Sendevorrichtung mit einer Telekommunikationsfunktion auf. Dadurch ist es möglich, dass in Fällen, wenn die vom Sensor erfassten Daten auf einen Unfall schließen lassen, ein Notruf über die Sendevorrichtung ausgesendet wird. Dabei können gegebenenfalls gleichzeitig die GPS-Daten übermittelt werden. Dies gilt auch für den Fall, dass das Fahrzeug gestohlen wurde. Die Kommunikationseinheit kann dann als Tracker zum Auffinden des Fahrzeugs dienen.

In einer weiteren Ausführungsform der Erfindung weist die Kommunikationseinheit eine Steuervorrichtung auf, von der bestimmte Fahrzeugparameter einstellbar sind. Diese Parameter betreffen beispielsweise die Abstimmung und/oder Konfiguration des Motors oder - im Falle eines elektronisch einstellbaren Fahrwerks - die Abstimmung einzelner Feder- und Dämpfelemente, wie zum Beispiel das Federbein oder die Federgabel.

Bevorzugt ist vorgesehen, dass die Schnittstelle selbst dazu ausgebildet ist, Daten oder Steuerbefehle zu empfangen. Zusätzlich oder alternativ kann eine gesonderte Empfangsvorrichtung zum Empfang von Daten und/oder Steuerbefehlen in der Kommunikationseinheit vorgesehen sein. Die empfangenen Daten oder Steuerbefehle können dann an die Steuerungseinheit weitergegeben werden, welche die Einstellung gewisser Parameter vornimmt. Dies hat den Vorteil, dass die einzelnen Fahrzeugparameter extern, beispielsweise an einem Smartphone, eingegeben werden können und dann über die Kommunikationseinheit an die Fahrzeugsteuerung weitergegeben werden.

In einer weiteren Ausführungsform der Erfindung ist die Kommunikationseinheit mit einem Schalter zum Starten und/oder Stoppen der Datenerfassung durch den zumindest einen Sensor verbindbar oder weist einen solchen Schalter auf. Die Verbindung kann dabei auch drahtlos erfolgen, beispielsweise über W-Lan oder Bluetooth^{®}. In diesem Fall kann der Beginn der Datenerfassung über eine App auf einem Smartphone gestartet werden.

In einer weiteren Ausführungsform der Erfindung ist die Kommunikationseinheit mit einem Display verbindbar oder weist ein Display auf, von dem der Betriebszustand der Kommunikationseinheit anzeigbar ist, etwa ob von den Sensoren derzeit Daten erfasst werden. Die Verbindung zum Display kann auch drahtlos erfolgen, beispielsweise über W-Lan oder Bluetooth^{®}. Dadurch ist es möglich, dass das Display in die zentrale Displayeinheit des Fahrzeugs integriert ist. Beim Display kann es sich um eine Beleuchtungseinrichtung handeln, beispielsweise eine LED-Lampe, wobei die verschiedenen Betriebszustände der Sensoren beispielsweise über Farben angezeigt werden. So kann das Leuchten in Grün anzeigen, dass Daten erfasst werden. Eine gelbe Farbe kann anzeigen, dass Daten über die Schnittstelle übermittelt werden. Ein blinkendes Signal kann beispielsweise anzeigen, dass das empfangene GPS-Signal schwach ist, etc.

Weitere Vorteile und Einzelheiten der Erfindung werden für verschiedene Ausführungsbeispiele anhand der folgenden Figuren diskutiert. Dabei zeigen:
- Fig. 1a bis 1c: eine Seitenansicht, eine Ansicht von hinten und eine Draufsicht eines Motorrads mit einem Lenkerprotektor,
- Fig. 2a und 2b: Detailansichten zu den Figuren 1b und 1c,
- Fig. 3: eine Darstellung eines Lenkerprotektors in geöffnetem Zustand mit einer Kommunikationseinheit,
- Fig. 4a bis 4d: eine Ansicht von unten, eine Ansicht von hinten, eine Draufsicht und eine Seitenansicht eines Lenkerprotektors,
- Fig. 5a und 5b: Explosionsdarstellungen zur Befestigung eines Lenkerprotektors, und
- Fig. 6: eine schematische Darstellung zum Aufbau der Kommunikationseinheit.

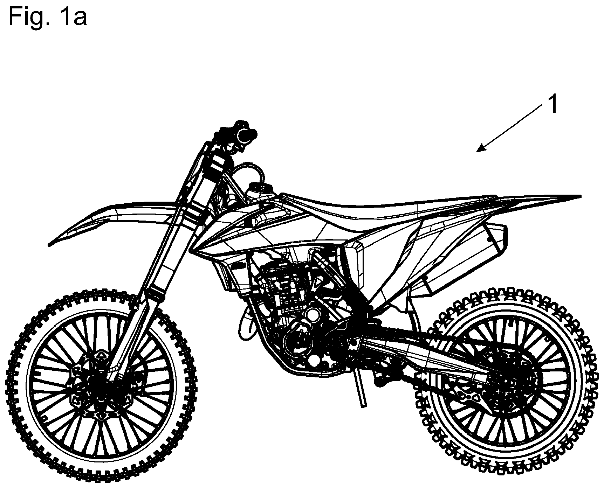

In den Figuren 1a bis 1c ist ein Fahrzeug 1 in Form eines Enduro-Motorrads in einer Seitenansicht, einer Ansicht von hinten und einer Draufsicht dargestellt. Ein erfindungsgemäßer, aus Schaumstoff hergestellter, Lenkerprotektor 5 ist zentral zwischen den Lenkergriffen 3a und 3b am Lenkrad 2 befestigt und überdeckt die Lenkerklemmung 13, welche üblicherweise aus Stahl hergestellt ist, sodass ein Aufprall beispielsweise mit dem Brustbereich auf die Lenkerklemmung 13 oft gravierende Folgen hat. Demgegenüber hat ein Aufprall auf den Lenkerprotektor 5 üblicherweise deutlich weniger schwerwiegende Folgen.

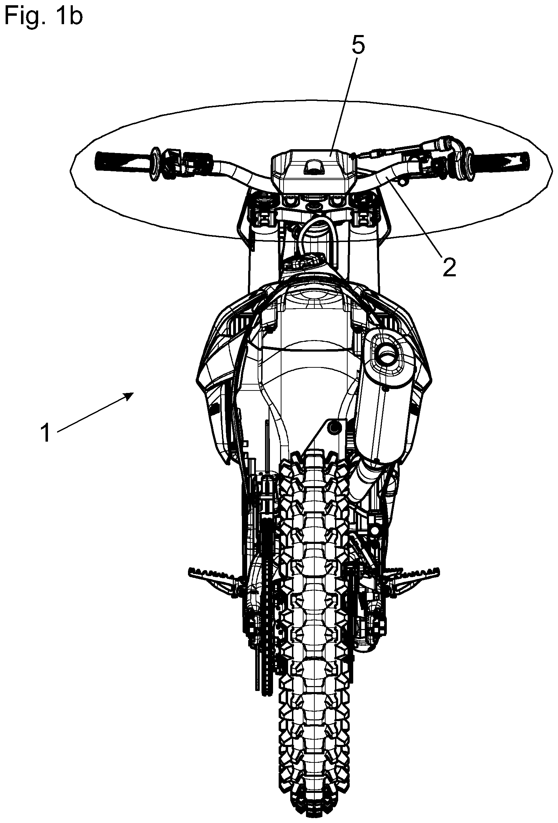

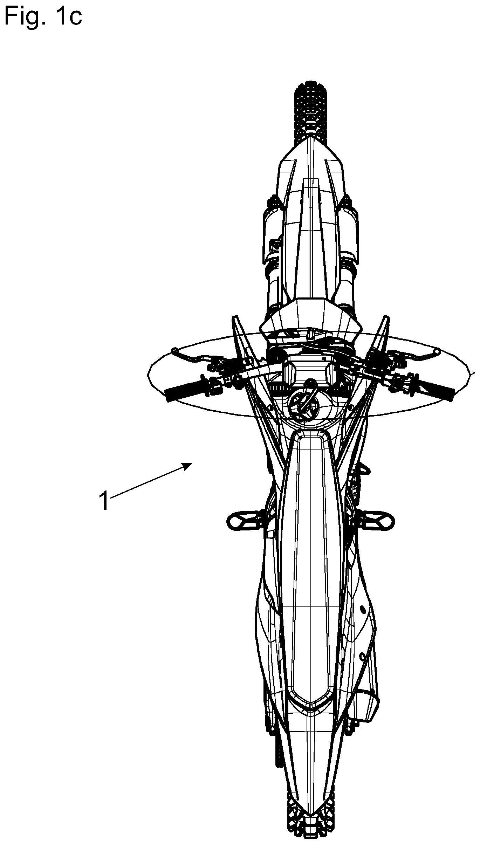

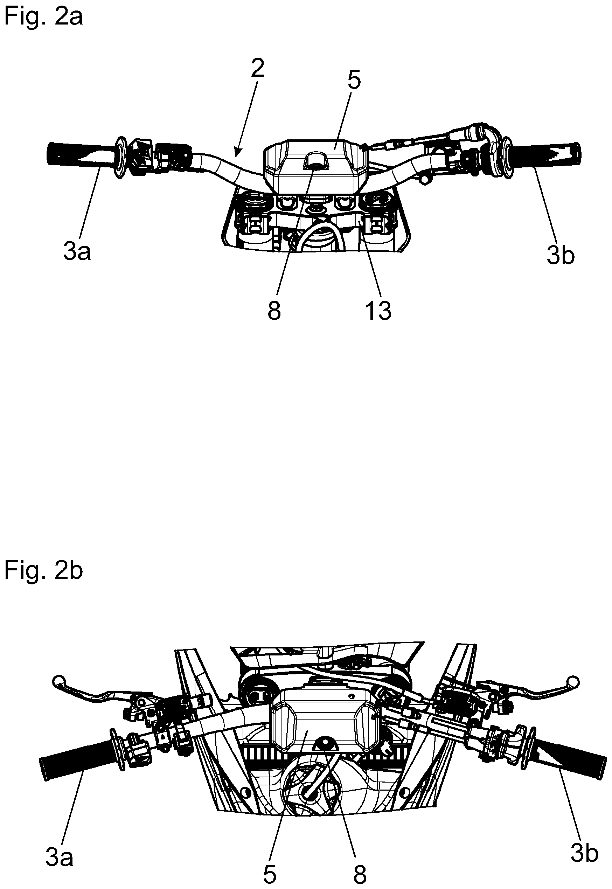

In den Fig. 2a und 2b sind die Abschnitte A und B gemäß den Fig. 1b und 1c in Detailansichten dargestellt, wobei erkennbar ist, dass der zumindest teilweise aus Schaumstoff hergestellte Lenkerprotektor 5 die Lenkerklemmung 13 abdeckt. Ein Display 8 in Form eines LED-Rings dient zur Anzeige des Betriebszustandes der in einer Ausnehmung 6 im Lenkerprotektor 5 angeordneten Kommunikationseinheit 4. Beispielsweise zeigt ein Leuchten des LED-Rings in einer gewissen Farbe an, dass GPS-Login aktiv ist. Selbstverständlich kann das Display 8 auch andere Formen oder Ausgestaltungen haben.

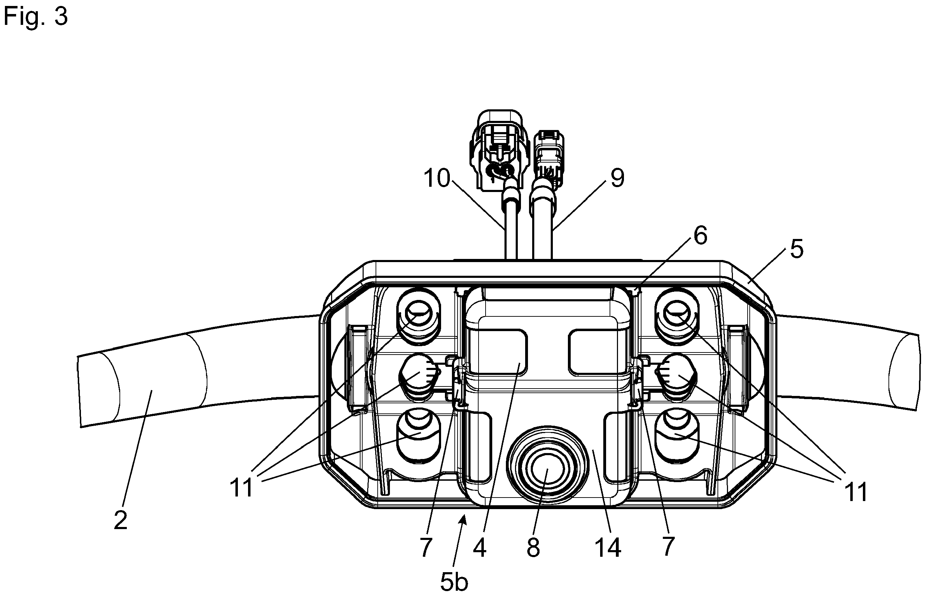

In der Fig. 3 ist ein erfindungsgemäßer Lenkerprotektor 5 in geöffnetem Zustand dargestellt. Erkennbar ist die in einer Ausnehmung 6 im Unterteil 5b des Lenkerprotektors 5 angeordnete Kommunikationseinheit 4, die in dieser Ausführungsform mit einer Stromleitung 9 über eine in der Kommunikationseinheit 4 angeordnete Empfangsvorrichtung und Sendevorrichtung verbunden ist, da die Stromleitung 9 nämlich einerseits mit der Batterie des Fahrzeugs 1 verbindbar ist und zur Stromversorgung der Kommunikationseinheit 4 dient, andererseits aber weitere Kabel aufweist, die zur Datenübertragung zwischen digitalen Ein- und Ausgängen dienen. Insbesondere weist in diesem Ausführungsbeispiel die Stromleitung 9 auch eine CAN-Bus-Datenleitung auf. Insgesamt werden über die in der Stromleitung 9 enthaltenen Kabel Parameter betreffend das Fahrzeug 1 und Steuerbefehle an verschiedene Teile des Fahrzeugs 1 gesendet und von diesen empfangen. In diesem Ausführungsbeispiel ist neben der Stromleitung 9 eine Datenleitung 10 vorgesehen, bei der es sich um eine Hochgeschwindigkeitsdatenleitung handelt, die beispielsweise zum Auslesen der Kommunikationseinheit 4 oder der Steuervorrichtung 19 oder anderer Steuergeräte des Fahrzeugs 1 dient, und/oder zum Aufspielen von Software zur Konfiguration oder für Firmware-Updates für diese Vorrichtungen herangezogen werden kann.

Die Kommunikationseinheit 4 ist in einer Halterung 14 aus Kunststoff angeordnet, die ihrerseits mit Rastelementen 7 im Eingriff ist, die im Unterteil 5b des Lenkerprotektors 5 angeordnet sind. Die Rastelemente 7 dienen zur Befestigung der Kommunikationseinheit 4 im Lenkerprotektor 5. Selbstverständlich sind verschiedenste Befestigungsmöglichkeiten für die Kommunikationseinheit 4 vorstellbar, wie auch für die Befestigung des Lenkerprotektors 5 am Lenker 2. Die gezeigten Varianten sind lediglich beispielhafte Ausführungsformen.

In der gezeigten Ausführungsform sind in der Haltevorrichtung 12 angeordnete Öffnungen 11 erkennbar. Die Haltevorrichtung 12 wird an der Unterseite des Unterteils 5b des Lenkerprotektors 5 angeordnet und dient in dieser Ausführungsform zur Befestigung des Lenkerprotektors 5 am Lenker 2 und auch zur Fixierung des Lenkers 2 am Fahrzeug 1. In die Öffnungen 11 werden Schrauben 12c eingesetzt, mit denen die Haltevorrichtung 12 am Lenker 2 befestigt wird.

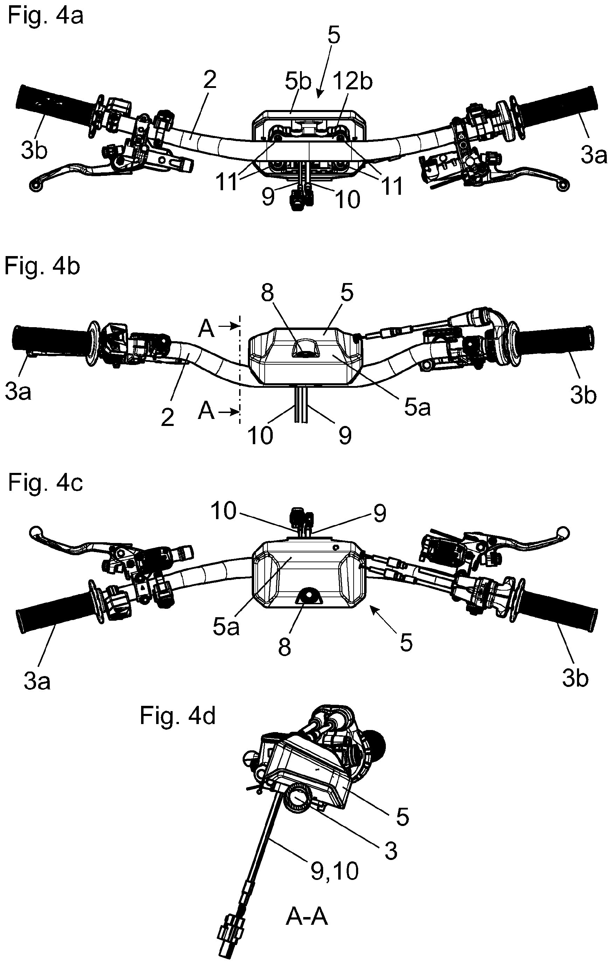

Die Figuren 4a bis 4d zeigen den Lenker 2 des erfindungsgemäßen Fahrzeugs 1 mit dem Lenkerprotektor 5 in einer Ansicht von unten, einer Ansicht von hinten, einer Draufsicht und einer Seitenansicht. Aus Gründen der Übersichtlichkeit sind nur Teile der Haltevorrichtung 12 dargestellt, mit der der Lenkerprotektor 5 am Lenker 2 befestigt wird. In der Ansicht von unten gemäß Fig. 4a sind Öffnungen 11 in jenem Teil 12b der Haltevorrichtung 12 erkennbar, der dazu ausgebildet ist, am zylinderförmigen zentralen Teil des Lenkers 2 angeordnet zu werden und den Lenker 2 zu fixieren. Der Unterteil 5b des Lenkerprotektors 5 wird seinerseits an dem Teil 12b befestigt. Dazu dienen in diesem Ausführungsbeispiel seitliche Bohrlöcher im Unterteil 5b des Lenkerprotektors 5 und des Teils 12b der Haltevorrichtung, die dann mittels in diese Bohrlöcher eingesetzten Schrauben verbunden werden können.

In den Figuren 4b und 4c ist insbesondere das Display 8 erkennbar, welches zur Darstellung des Betriebszustandes der Kommunikationseinheit 4 dient. Der Oberteil 5a des Lenkerprotektors 5 dient als Dämpfelement im Falle eines Sturzes für den Fahrer des Fahrzeugs 1 und ist zu diesem Zweck aus Schaumstoff hergestellt. In diesem Ausführungsbeispiel ist der Oberteil 5a schwenkbar am Unterteil 5b befestigbar. Für die Lagerung und Befestigung des Oberteils 5a am Unterteil 5b können spezielle Lagerungs- und Befestigungsmittel, beispielsweise Rastelemente 16 vorgesehen sein. Alternativ kann der Lenkerprotektor 5 aber auch einteilig hergestellt sein. Falls die Kommunikationseinheit 4 in Fall eines einteiligen Lenkerprotektors 5 innerhalb des Lenkerprotektors 5 angeordnet ist, kann die Kommunikationseinheit 4 während des Herstellungsverfahrens im Lenkerprotektor 5 angeordnet werden. Es ist aber auch ein öffenbarer Lenkerprotektor 5 möglich, bei dem der integral mit dem Unterteil 5b verbundene Oberteil 5a drehbar gelagert ist und dadurch das Innere des Lenkerprotektors 5 frei zugänglich gemacht werden kann.

Der Unterteil 5b des Lenkerprotektors 5 kann ebenfalls aus einem, beispielsweise wie oben beschriebenen Schaumstoff hergestellt sein. Aus Stabilitätsgründen ist es aber bevorzugt vorgesehen, den Unterteil 5b aus einem härteren Material, beispielsweise aus einem wie oben beschriebenen Hartplastik, herzustellen. Dies erhöht die Stabilität der Befestigung des Lenkerprotektors 5 am Lenker 2. In dieser Ausführungsform ist die Ausnehmung 6 im Unterteil 5b des Lenkerprotektors 5 angeordnet. Zusätzlich oder alternativ kann eine weitere Ausnehmung im Oberteil 5a des Lenkerprotektors 5 angeordnet sein.

Im Ausführungsbeispiel der Fig. 4a bis 4d kann der Oberteil 5a des Lenkerprotektors 5 auch für sich als eigenständiger Lenkerprotektor 5 angesehen werden. In diesem Fall ist die Kommunikationseinheit 4 unterhalb des Lenkerprotektors 5 angeordnet. Der Unterteil 5b einschließlich der Haltevorrichtung 12 ist in diesem Fall als Haltevorrichtung für den Lenkerprotektor 5 anzusehen.

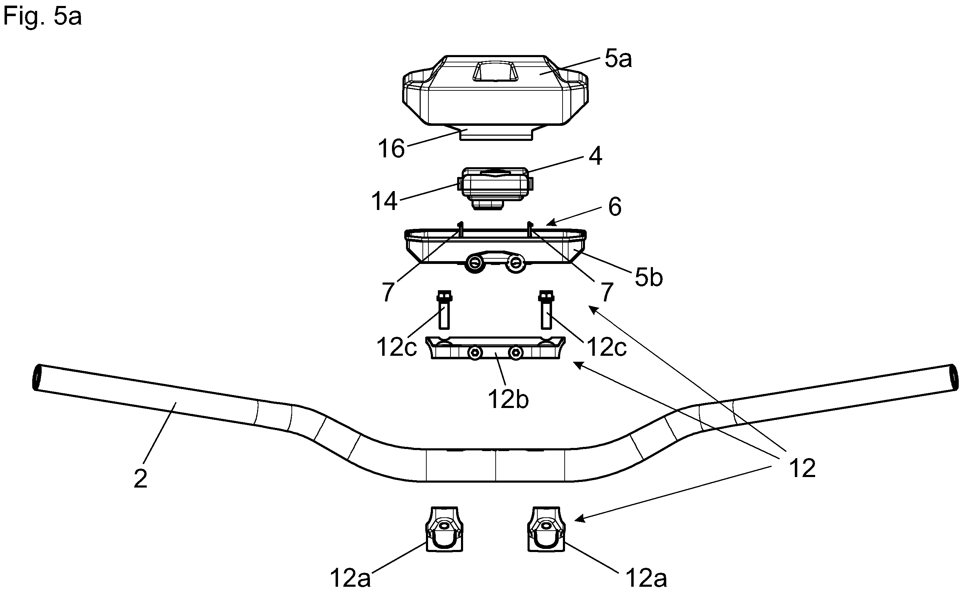

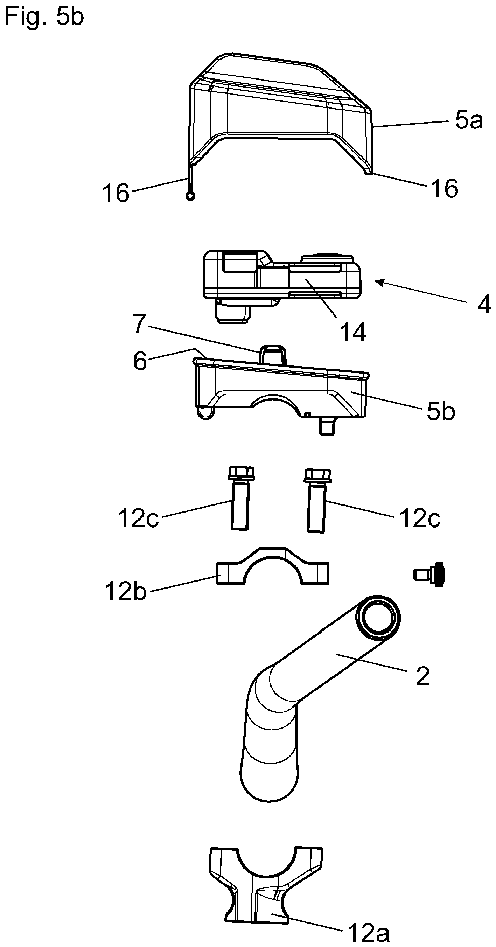

Die Fig. 5a zeigen in einer Ansicht von hinten und einer Seitenansicht eine Explosionsdarstellung der wesentlichen Bauteile des Lenkerprotektors 5 einschließlich des Lenkers 2, an dem dieser befestigt wird. Die Haltevorrichtung 12 besteht aus zwei Elementen 12a, die dazu ausgebildet sind, an der Unterseite des Lenkers 2 angeordnet zu werden und gemeinsam mit dem an der Oberseite des Lenkers 2 angeordneten Teil 12b der Haltevorrichtung den Lenker 2 am Rahmen des Fahrzeugs 1 zu fixieren. Zu diesem Zweck dienen Befestigungsmittel 12c, die in Öffnungen 11 im Teil 12 b und korrespondierende Öffnungen im Teil 12a eingesetzt werden können. Im Teil 12b sind zudem seitliche Bohrlöcher vorgesehen, die zu seitlichen Bohrlöchern im Unterteil 5b des Lenkerprotektors 5 korrespondieren. In seitlichen Bohrlöcher im Teil 12b und im Unterteil 5b können Schrauben eingesetzt werden (in der Fig. 5b rechts neben dem Teil 12b dargestellt), sodass der Unterteil 5b des Lenkerprotektors 5 am Teil 12b der Haltevorrichtung 12 befestigt wird. Darüber hinaus kann es vorgesehen sein, den Unterteil 5b mit hier nicht dargestellten Kabelbindern zusätzlich am Lenker 2 zu befestigen. Zu diesem Zweck sind entsprechende Öffnungen im Unterteil 5b vorgesehen.

Der Unterteil 5b weist weiters Rastelemente 7 auf, die in eine entsprechende Ausnehmung der Halterung 14 der Kommunikationseinheit 4 eingreifen können. Dadurch wird die Kommunikationseinheit 4 in einer im Unterteil 5b angeordneten Ausnehmung 6 befestigt. Auch der Oberteil 5a des Lenkerprotektors 5 weist Rastelemente 16 auf, mit denen dieser lösbar und schwenkbar am Unterteil 5b befestigbar ist. Dabei dient das links angeordnete Rastelement 16 als Drehachse und ist in verbundenem Zustand in einer korrespondierenden Nut im Unterteil 5b gelagert. Das rechts angeordnete Rastelement 16 dient als Rastnase und greift im verbundenen Zustand an eine vorspringende Kante am Unterteil 5b ein. Es kann vorgesehen sein, den Unterteil 5b lösbar am Oberteil 5a zu befestigen. Es kann auch vorgesehen sein, den Unterteil 5b nur schwenkbar, aber nicht lösbar auszubilden. In diesem Fall kann das rechts dargestellte Element 16 eine im Unterteil 5b drehbar gelagerte Drehachse darstellen.

Die rechts neben dem Teil 12b dargestellte Schraube wird in die seitlichen Bohrlöcher im Teil 12b und im Unterteil 5b eingesetzt, wodurch der Unterteil 5b des Lenkerprotektors 5 am Teil 12b der Haltevorrichtung 12 befestigt wird.

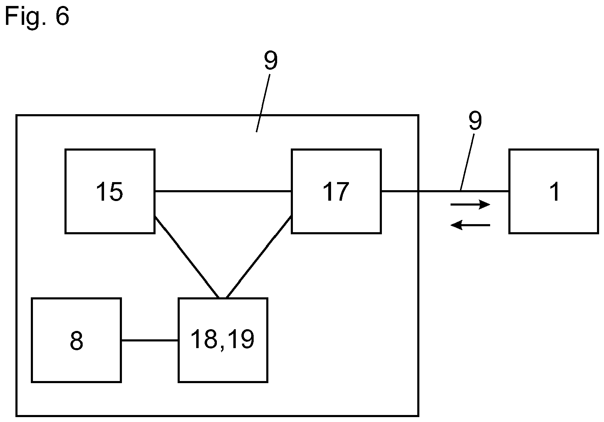

Die Fig. 6 zeigt in einer schematischen Darstellung den Aufbau einer erfindungsgemäßen Kommunikationseinheit 4. Die Kommunikationseinheit 4 weist einen Sensor 15 zur Erfassung von Daten betreffend das Fahrzeug 1 auf. Dabei kann es sich beispielsweise um einen Sensor 15 zur Erfassung der GPS-Daten des Fahrzeugs 1, einen Beschleunigungssensor oder dergleichen mehr handeln. Insbesondere die Erfassung von GPS-Signalen wird durch die Platzierung des Sensors 15 in der Kommunikationseinheit 4 am Lenker 2 stark erleichtert. Die Kommunikationseinheit 4 weist weiters eine Schnittstelle 17 auf, die über eine Datenleitung 9 Daten und/oder Steuerbefehle an das Fahrzeug 1 übertragen oder vom Fahrzeug 1 empfangen kann. Die Übertragung dieser Daten und der Steuerbefehle kann auch drahtlos, beispielsweise über W-Lan oder Bluetooth^{®} erfolgen. Die Schnittstelle 17 kann auch als Empfangsvorrichtung und/oder als Sendevorrichtung ausgebildet sein.

Die Kommunikationseinheit 4 weist weiters eine Recheneinheit 18 und eine Steuervorrichtung 19 auf. Die Recheneinheit 18 dient zur Verarbeitung der vom Sensor 15 erfassten oder der von der Schnittstelle 17 empfangenen Daten auf. Die Steuervorrichtung 19 dient zur Generierung von Steuerbefehlen, gegebenenfalls basierend auf den erfassten oder empfangenen Daten, wobei die Steuerbefehle über die Schnittstelle 17 an das Fahrzeug 1 übermittelt werden.

Weiters weist die Kommunikationseinheit 4 ein Display 8 zur Darstellung des Funktionszustandes der Kommunikationseinheit 4 auf.

### Bezugszeichenliste:

- 1: Fahrzeug
- 2: Lenker
- 3a, 3b: Lenkergriffe
- 4: Kommunikationseinheit
- 5: Lenkerprotektor
- 5a, 5b: Ober- und Unterteil des Lenkerprotektors
- 6: Ausnehmung
- 7: Rastelemente
- 8: Display
- 9: Stromleitung
- 10: Datenleitung
- 11: Öffnungen in der Haltevorrichtung
- 12: Haltevorrichtung
- 12a-12c: Elemente der Haltevorrichtung
- 13: Lenkerklemmung
- 14: Halterung
- 15: Sensor
- 16: Rastelemente für die Halterung
- 17: Schnittstelle
- 18: Recheneinheit
- 19: Steuervorrichtung

## Patentansprüche

1. Fahrzeug, insbesondere Motorrad, aufweisend einen Rahmen, einen Lenker (2) mit zwei Lenkergriffen (3a, 3b) und einer Kommunikationseinheit (4) mit zumindest einem Sensor (15) zur Erfassung von Daten betreffend das Fahrzeug (1) und einer Schnittstelle (17) zum Übertragen der erfassten Daten, **dadurch gekennzeichnet, dass** ein Lenkerprotektor (5) vorgesehen ist, wobei der Lenkerprotektor (5), vorzugsweise zentral, zwischen den Lenkergriffen (3a, 3b) angeordnet ist und wobei die Kommunikationseinheit (4) unterhalb des Lenkerprotektors (5) oder zumindest teilweise, vorzugsweise zur Gänze, innerhalb des Lenkerprotektors (5) angeordnet ist.

2. Fahrzeug nach dem vorhergehenden Anspruch, wobei der Lenkerprotektor (5) eine Ausnehmung (6) aufweist, in der die Kommunikationseinheit (4) anordenbar ist.

3. Fahrzeug nach wenigstens einem der vorhergehenden Ansprüche, wobei eine Haltevorrichtung (12) vorgesehen ist, von der die Kommunikationseinheit (4) und/oder der Lenkerprotektor (5) gehalten werden, und wobei die Haltevorrichtung (12) am Lenker (2) befestigt ist

4. Fahrzeug nach wenigstens einem der vorhergehenden Ansprüche, wobei die Kommunikationseinheit (4) einen Speicher zur Speicherung der vom Sensor erfassten Daten aufweist.

5. Fahrzeug nach wenigstens einem der vorhergehenden Ansprüche, wobei die Kommunikationseinheit (4) mehrere Sensoren zur Erfassung von Daten betreffend das Fahrzeug (1) aufweist, insbesondere einen GPS-Sensor, einen Beschleunigungssensor, einen Temperatur-Sensor und/oder einen Neigungssensor.

6. Fahrzeug nach wenigstens einem der vorhergehenden Ansprüche, wobei die Kommunikationseinheit (4) eine Empfangsvorrichtung zum Empfang von Daten betreffend den Fahrzeugzustand aufweist.

7. Fahrzeug nach wenigstens einem der vorhergehenden Ansprüche, wobei die Kommunikationseinheit (4) eine Recheneinheit (18) aufweist, insbesondere zum Erstellen von Statistiken aus den erfassten und/oder empfangenen Daten.

8. Fahrzeug nach wenigstens einem der vorhergehenden Ansprüche, wobei die Schnittstelle (17) zur drahtlosen Übertragung von Daten, insbesondere gemäß dem W-Lan-Standard und/oder Bluetooth^{®}-Standard, ausgebildet ist.

9. Fahrzeug nach wenigstens einem der vorhergehenden Ansprüche, wobei die Kommunikationseinheit (4) eine Sendevorrichtung mit Telekommunikationsfunktion aufweist.

10. Fahrzeug nach wenigstens einem der vorhergehenden Ansprüche, wobei die Kommunikationseinheit (4) eine Steuervorrichtung (19) aufweist, von der zumindest ein Fahrzeugparameter einstellbar ist.

11. Fahrzeug nach wenigstens einem der vorhergehenden Ansprüche, wobei die Schnittstelle (17) dazu ausgebildet ist, Daten oder Steuerbefehle zu empfangen und/oder eine Empfangsvorrichtung zum Empfang von Daten und/oder Steuerbefehlen vorgesehen ist.

12. Fahrzeug nach wenigstens einem der vorhergehenden Ansprüche, wobei die Kommunikationseinheit (4) mit einem Schalter zum Starten und/oder Stoppen der Datenerfassung durch den zumindest einen Sensor (15) verbindbar ist oder einen solchen Schalter aufweist.

13. Fahrzeug nach wenigstens einem der vorhergehenden Ansprüche, wobei die Kommunikationseinheit (4) mit einem Display (8), insbesondere in Form einer Beleuchtungseinrichtung, verbindbar ist oder ein Display (8) aufweist, von dem der Betriebszustand der Kommunikationseinheit (4) anzeigbar ist.

14. Fahrzeug nach wenigsten einem der vorhergehenden Ansprüche, **dadurch gekennzeichnet, dass** der Lenkerprotektor (5) ein dämpfendes Material, insbesondere einen Schaumstoff, zu Schutz eines Fahrers beinhaltet.

15. Fahrzeug nach Anspruch 14, **dadurch gekennzeichnet, dass** das dämpfende Material einen Oberteil des Lenkerprotektors (5) bildet, welcher im montierten Zustand dem Fahrer zugewandt ist, wobei das Oberteil vorzugsweise mit einem härteren, beispielsweise aus Hartplastik hergestellten, Unterteil, vorzugsweise lösbar oder öffenbar, verbindbar ist.
